# EUROPÄISCHE PATENTSCHRIFT

(11) **EP 2 520 442 B1**
(45) Veröffentlichungstag und Bekanntmachung des Hinweises auf die Patenterteilung: **17.07.2013**
(21) Anmeldenummer: 11164453.0
(22) Anmeldetag: 02.05.2011
(51) Int. Cl.: B43K 19/02, B43K 19/18

(54) **Mine**
Lead
Mine

(43) Veröffentlichungstag der Anmeldung: 07.11.2012
(73) Patentinhaber: Faber- Castell AG, 90546 Stein (DE)
(72) Erfinder: Lugert, Dr. Gerhard, 90431 Nürnberg (DE); von Godin, Harald, 90522 Oberasbach (DE); Appel, Reiner, 90522 Oberasbach (DE)
(74) Vertreter: Meissner, Bolte & Partner

(56) Entgegenhaltungen:
- EP-A1- 1 621 182
- WO-A1-2010/006742
- DE-C1- 3 827 968
- US-A- 5 591 787

## Beschreibung

Die Erfindung betrifft eine Mine für Schreib- und Malzwecke. Unter einer Mine ist eine Stiftmine, die zur Anordnung innerhalb eines Stiftschaftes etwa aus Holz oder Kunststoff vorgesehen ist, oder eine Kreide, die für eine Verwendung ohne einen solchen Stiftschaft vorgesehen ist, zu verstehen. Eine Mine wird bei der Erzeugung eines Aufstriches auf einer Unterlage wie Papier einer relativ starken mechanischen Belastung ausgesetzt. Dies liegt unter anderem daran, dass bei Schreib- und Malarbeiten weiche Minen, mit denen relativ große Mengen auf eine Unterlage übertragen werden können, etwa wie dies bei Kosmetikstiften der Fall ist, meist nicht zweckmäßig. Minen für den in Rede stehenden Zweck weisen daher eine festere Konsistenz auf und sind insgesamt bruchstabiler als Kosmetikminen. Die erforderliche Festigkeit wird beispielsweise bei Kunststoffminen durch Verwendung polymerer Bindemittel erreicht. Solche Kunststoffminen weisen zwar eine ausreichende Festigkeit auf, sind aber hinsichtlich ihres Aufstrichverhaltens nicht optimal. Es sind relativ hohe Kräfte erforderlich, um so viel Minenmasse auf die Unterlage zu applizieren, dass einigermaßen deckende Aufstriche entstehen. Um die Deckkraft der Kunststoffminen zu erhöhen, kann der Minenmasse eine erhöhte Menge an Farbpigmenten zugesetzt werden, was allerdings die Herstellung solcher Minen verteuert. Ein weiterer Nachteil von Kunststoffminen ist die Tatsache, dass zur thermoplastischen Erweichung des polymeren Bindemittels, beispielsweise Polyvinylbutyral bei der aus EP 1069166 B1 bekannten Mine, die Vermischung der Ausgangssubstanzen und die bekannten Mine, die verwischung der Ausgangssubstanzen und die Extrusion von Minensträngen bei relativ hohen Temperaturen von bis zu 180 °C erfolgen muss, was einen entsprechend hohen Energieaufwand bedeutet. Bedingt durch die hohen Verarbeitungstemperaturen können temperaturempfindliche Pigmente wie Azopigmentenicht verwendet werden. Beispielsweise sind die Azopigmente C.I. 11741 Pigment Yellow 74 und C.I. 12085 Pigment Red 4 nur bis 160 °C bzw. 140 °C beständig.

EP 1 621 182 beschreibt eine Kosmetikmine mit einer aus 1% bis 20% Fettsäuresalz und 5% bis 40% einer lipophilen Substanz gebildeten Minengrundmasse.

Aufgabe der Erfindung ist es, eine Mine für Schreib- oder Malzwecke anzugeben, mit der sich bei geringem Kraftaufwand und bei geringem Einsatz an Farbpigmenten auf einer Unterlage farbkräftige und deckende Abstriche erzeugen lassen, wobei sich die Mine bei Temperaturen unterhalb von 160 °C verarbeiten, insbesondere extrudieren lässt.

Diese Aufgabe wird durch eine Mine gelöst, die 15 % bis 30 % einer Minengrundmasse auf Fett- und Wachsbasis und 40 % bis 80 % eines Füllstoffs und 0,1 % bis 30 % Farbmittel, vorzugsweise organische und/oder anorganische Farbpigmente, enthält, wobei die Minengrundmasse - bezogen auf die Gesamtmasse der Mine - 0,5 % bis 10 % Aluminiumdistearat, 5 % bis 20 % oxidiertes Polyethylenwachs und 5 % bis 20 % eines wenigstens einer Fettsäure und/oder wenigstens eines Fettsäurederivats mit einem Schmelzpunkt von 50 °C bis 110 °enthält. Als Fettsäurederivate kommen insbesondere Fettsäureester und Fettalkohole in Betracht. Die Ausgangsubstanzen einer solchen Mine, nämlich die pulver- oder flockenförmigen Bestandteile der Minengrundmasse, wenigstens ein beigemengter Füllstoff und gegebenenfalls ein Farbpigment, lassen sich bereits bei einer Temperatur von etwa 120 °C innig vermischen, und bei einer Temperatur von etwa 130 °C extrudieren. Dabei kommt es zu einer Erweichung der Minengrundmasse, wobei deren Konsistenz so beschaffen ist, dass sich trotz eines hohen Anteils an Füllstoff und Farbpigment Minenstränge mit einem Durchmesser z.B. von 3 bis 5 mm, im Falle von Kreiden auch mehr, extrudieren lassen, die ohne die Gefahr einer mechanischen Beeinträchtigung, etwa beim Weitertransport zu einer Einleimstation, handhabbar sind. Bei Extrusionsversuchen zeigte sich überraschender Weise, dass sich erfindungsgemäße Minen im Vergleich zu beispielsweise PVB als Bindemittel enthaltenden Polymerminen mit höheren Geschwindigkeiten, nämlich solchen von bis zu 60 m/min extrudieren lassen. Eine derart schnelle Extrusion lässt sich nur durchführen, wenn die auf eine Extrusionstemperatur von beispielsweise 130°C erhitzte Minenmasse eine entsprechend feste Konsistenz aufweist. Dies lässt sich bei Polymerminen zwar durch Zusatz geeigneter Verdicker oder durch eine erhöhte Menge an Kunststoff erreichen. Eine solche Maßnahme wirkt sich aber auch auf den extrudierten Minenstrang aus, d.h. dieser kann zu hart oder von gummiartiger Konsistenz sein, was einem weichen Abstrichverhalten und dem Ziel, deckende Abstriche auf einer Unterlage zu erzeugen, zuwiderläuft. Anders ist dies bei einer erfindungsgemäßen Mine, deren Minengrundmasse im erhitzten bzw. erweichten Zustand eine für die Extrusion von Minensträngen gut geeignete Konsistenz aufweist, wobei aber aus den extrudierten Minensträngen Minen ablängbar sind, die weder hart sind noch eine gummiartige Konsistenz aufweisen, sondern die sich unter Bildung farbkräftiger und deckender Aufstriche auf einer Unterlage erzeugen lassen.

Hervorzuheben ist weiterhin, dass für das Mischen der Ausgangssubstanzen im Vergleich zu Polymerminen ein geringerer Zeitbedarf erforderlich ist. Schließlich ist im Hinblick auf die Herstellungskosten vorteilhaft, dass sich mit der Mine trotz relativ geringem Anteil an Farbpigmenten farbkräftige deckende Aufstriche erzeugen lassen. Dabei ist die Mine im Anschluss an die Extrusion ausreichend mechanisch stabil und bruchfest, um den Belastungen die sich bei normalem Gebrauch ergeben, stand zu halten. Für das gute Aufstrichverhalten der Mine ist in hohem Maße die in der Mine enthaltende Fettsubstanz, also Fettsäure und/oder Fettsäurederivat verantwortlich. Das Aufstrichverhalten lässt sich durch die Wahl des Schmelzpunkts der Fettsubstanz steuern. So können bei Verwendung beispielsweise eines Triglycerids mit einem Schmelzpunkt Minen mit einem weicheren Abstrichverhalten und bei Verwendung beispielsweise einer Mischung aus Stearinsäure enthaltender Sojabohnensäure (CAS-Nr. 57114) und hydrogeniertem Sojabohnenöl (CAS-Nr. 8016-70-4) mit einem Schmelzpunkt von 95 °C bis 105 °C Minen mit einem härteren Abstrichverhalten hergestellt werden.

Schließlich ist noch von Vorteil, dass trotz hoher Anteile an partikelförmigen Substanzen wie Füllstoffen und Farbpigmenten nur 15 % bis 30 %, vorzugsweise 15 % bis 26 % an Minengrundmasse, deren Substanzen vergleichsweise teuer sind, erforderlich sind.

Das eingesetzte oxidierte Polyethylenwachs hat vorzugsweise einen Schmelzpunkt von 115 °C bis 125 °C, insbesondere von 118 °C bis 122 °C. Bei Extrusions- oder Mischtemperaturen von mehr als 125 °C bzw. 122 °C hat das Wachs eine nahezu wasserartige Viskosität. In Mischung mit den weiteren Bestandteilen der Minengrundmasse bildet sich aber bei den vorherrschenden Temperaturen während der Mischens und Extrudierens eine Masse der oben beschriebenen Art aus.

Für die fettartige Substanz der Minengrundmasse wird vorzugsweise ein Triglycerid mit einen Schmelzpunkt von 58 °C bis 62 °C eingesetzt.

Die Menge an Aluminiumdistearat, welches für das geschilderte Eigenschaftsprofil der Mine einen wichtigen Beitrag liefert, reichen Mengen von 1 % bis 6 % oder vorzugsweise von 1 % bis 3,5 % aus, wodurch die Kosten für die Herstellung der Mine gesenkt werden können. Gleiches trifft für Polyethylenwachs und Triglycerid zu, deren Anteile auf 7 % bis 15 % bzw. 5 % bis 15 % gesenkt werden können, wobei aber hinsichtlich der geschilderten Mineneigenschaften die besten Ergebnisse erreicht sind.

Der Hauptanteil der Minenmasse wird durch wenigstens einen polaren Füllstoff, vorzugsweise einen Füllstoff aus der Gruppe Kaolin, Glimmer, Bimsmehl und Talk gebildet, wobei Kaolin besonders bevorzugt ist. Ein solcher Füllstoff wird aufgrund seiner Polarität, also aufgrund der Existenz von getrennten Ladungsschwerpunkten in seinem chemischen Aufbau, etwa seiner Kristallstruktur, von einer Grundmasse, die Substanzen mit polaren Molekülgruppen aufweist, besonders gut gebunden. In diesem Sinne ist es daher vorteilhaft, nicht unpolares sondern polares, nämlich oxidiertes PE-Wachs einzusetzen. Die in der Mine enthaltenen Farbmittel, vorzugsweise organische und/oder anorganische Farbpigmente, haben aufgrund ihrer chromophoren Gruppen polaren Charakter und werden daher von der vorgeschlagenen Minenmasse gut gebunden.

Damit Füllstoff- und Farbpigmentpartikel das Abstrichverhalten und die Konsistenz der Mine nicht negativ beeinflussen, etwa zu einer brüchigen, krümeligen Konsistenz führen, werden Füllstoffe und Farbpigmente mit einer mittleren Partikelgröße D90% < 20 µm eingesetzt.

Im Folgenden sind fünf Beispielrezepturen von gefärbten Minen aufgeführt. Die Ausgangsubstanzen (insgesamt z.B. 100 kg) werden in einem Mischer bei 120 °C gemischt. Die Extrusion der Minenmasse zu Minensträngen mit einem Durchmesser von 3 mm erfolgt beispielsweise mit einem Zweischneckenextruder bei einer Temperatur von 130 °C. Für die Extrusion von 100 kg Minenmasse wird etwa 1h benötigt. An den Extruder schließt sich eine Kühlstrecke von einigen Metern an. Die extrudierten Minenstränge werden zu Minen abgelängt, welche sofort weiterverarbeitet werden können.

### Beispiel 1:

| | |
|---|---|
| Aluminiumdistearat (Ligastar ALG-V, CAS-Nr. 97404-28-9, Smp. = 140 °C, D50 etwa 40 µm) ¹⁾ | 2,12 % |
| Triglycerid (Polycerin Hydro RD 907, CAS-Nr. 801670-4 (90%) und Prozessmittel CAS-Nr. 63231-60-7, Smp. ca. 66°C) ²⁾ | 6,12 % |
| Oxidiertes Polyethylenwachs (Licowax PED 121, CAS-Nr. 68441-17-8, Smp. ca. 115 °C) ³⁾ | 11,76 % |
| Kaolin (ASP 602) ⁴⁾ | 77,00 % |
| Permanentrot FGR ⁵⁾ | 2,55 % |
| Irgalithgelb GO ⁶⁾ | 0,45 % |

### Beispiel 2:

| | |
|---|---|
| Aluminiumdistearat (wie Beispiel 1) | 4,24 % |
| Triglycerid (wie Beispiel 1) | 6,12 % |
| Oxidiertes PE-Wachs (wie Beispiel 1) | 11,76 % |
| Kaolin (wie Beispiel 1) | 74,88 % |
| Irgalithgelb GO **⁶⁾** | 3,00 |

### Beispiel 3:

| | |
|---|---|
| Aluminiumdistearat (wie Beispiel 1) | 1,70 % |
| Triglycerid (wie Beispiel 1) | 4,90 % |
| Oxidiertes PE-Wachs (wie Beispiel 1) | 9,40 % |
| Compacted Talc GM10 **⁷⁾** | 80,00 % |
| Titandioxid KRONOS 2300 **⁸⁾** | 1,00 % |
| Cosmos Blue ASF **⁹⁾** | 2,75 % |
| Permanentcarmin FBB **¹⁰⁾** | 0,25 % |

### Beispiel 4:

| | |
|---|---|
| Aluminiumdistearat (wie Beispiel 1) | 1,30 % |
| Mischung aus Stearinsäure enthaltender Sojabohnensäure (CAS-Nr. 57114) und hydrogeniertem Sojabohnenöl (CAS-Nr. 8016-70-4) mit einem Schmelzpunkt von 95 °C bis 105 °C (Comarlub OVNI-V ¹¹⁾) | 5,20 % |
| Oxidiertes PE-Wachs (wie Beispiel 1) | 13,50 % |
| Kaolin ASP 602 (wie Beispiel 1) | 75,00 % |
| Bayferrox 120N ¹²⁾ | 5,00 % |

### Beispiel 5:

| | |
|---|---|
| Aluminiumdistearat (wie Beispiel 1) | 2,10 % |
| Triglycerid (wie Beispiel 1) | 3,20 % |
| Oxidiertes PE-Wachs (wie Beispiel 1) | 13,00 % |
| Comarlub OVNI-V (wie Beispiel 4) | 4,20 % |
| Kaolin BSK-H ¹³⁾ | 71,50 % |
| PV-Echtgrün GNX ⁵⁾ | 2,20 % |
| Titandioxid Kronos 2300 | 3,80 % |

Bei der Mine von Beispiel 5 wurde als Fettsubstanz Comarlub OVNI-V und Triglycerid eingesetzt. Sie ist härter als die Mine der Beispiele 1 bis 3, aber weicher als die Mine des Beispiels 4.

Alle Prozentangaben sind Gewichtsprozent.

### Hersteller:

1) Peter Greven, D-53902 Bad Münstereifel
2) TH.C.Tromm GmbH, D-50735 Köln/Cologne
3) Clariant AG, D-65929 Frankfurt am Main
4) BASF AG, D-67056 Ludwigshafen
5) Clariant AG, D-65929 Frankfurt am Main
6) BASF AG, D-67056 Ludwigshafen
7) Magnesita S.A., Bela Vista - 01311-000 Säo Paulo / SP8) Kronos, D-51373 Leverkusen
9) Toyo INK, 60870 Villers Saint Paul, France
10) Clariant AG, D-65929 Frankfurt am Main
11) Comarplast Indústria E Comércio Ltda., Sao Paulo/SP
12) Lanxess, D-51369 Leverkusen
13) Amberger Kaolinwerke, D-92242 Hirschau

## Patentansprüche

1. Mine für Schreib- und/oder Malzwecke, mit 15 Gew.-% bis 30 Gew.-% einer Minengrundmasse auf Fett- und Wachsbasis und 40 Gew.-% bis 80 % wenigstens eines Füllstoffs und 0,1 Gew.-% bis 30 % organische und/oder anorganische Farbpigmente, wobei die Minengrundmasse - bezogen auf die Gesamtmasse der Mine - 0,5 % bis 10 % Aluminiumdistearat, 5 % bis 20 % oxidiertes Polyethylenwachs, und 5 % bis 20 % wenigstens einer Fettsäure und/oder wenigstens eines Fettsäurederivats mit einem Schmelzpunkt von 50 °C bis 110 °C enthält.

2. Mine nach Anspruch 1,
**dadurch gekennzeichnet,**
**dass** ein Triglycerid mit einem Schmelzpunkt von 55 °C bis 65 °C enthalten ist.

3. Mine nach Anspruch 1,
**dadurch gekennzeichnet,**
**dass** eine Mischung aus Stearinsäure enthaltender Sojabohnensäure, CAS-Nr. 571144, und hydrogeniertem Sojabohnenöl, CAS-Nr. 8016-70-4, mit einem Schmelzpunkt von 95 °C bis 105 °C enthalten ist.

4. Mine nach einem der vorhergehenden Ansprüche, **dadurch gekennzeichnet, dass** der Anteil an Minengrundmasse max. 26 Gew.-% beträgt.

5. Mine nach einem der vorhergehenden Ansprüche, **dadurch gekennzeichnet, dass** das oxidierte Polyethylenwachs einen Schmelzpunkt von 115 °C bis 125 °C aufweist.

6. Mine nach Anspruch 5, **dadurch gekennzeichnet, dass** das oxidierte Polyethylenwachs einen Schmelzpunkt von 118 °C bis 122 °C aufweist.

7. Mine nach einem der Ansprüche 2 bis 6, **dadurch gekennzeichnet, dass** das Triglycerid einen Schmelzpunkt von 58 °C bis 62 °C aufweist.

8. Mine nach einem der vorhergehenden Ansprüche, **gekennzeichnet durch** einen Anteil an Aluminiumdistearat von 1 bis 6 Gew.- %.

9. Mine nach Anspruch 8, **gekennzeichnet durch** einen Anteil an Aluminiumdistearat von 1 bis 3,5 Gew.- %.

10. Mine nach einem der vorhergehenden Ansprüche, **gekennzeichnet durch** einen Anteil an oxidiertem Polyethylenwachs von 7 bis 15 Gew.- %.

11. Mine nach einem der vorhergehenden Ansprüche, **gekennzeichnet durch** einen Anteil an Fettsäure und/oder Fettsäurederivat von 5 bis 15 Gew.- %.

12. Mine nach einem der vorhergehenden Ansprüche, **gekennzeichnet durch** wenigstens einen Füllstoff aus der Gruppe Kaolin, Glimmer, Bimsmehl und Talk.

13. Mine nach einem der vorhergehenden Ansprüche, **dadurch gekennzeichnet, dass** Füllstoffe und Farbpigmente eine mittlere Partikelgröße D90 < 20 um aufweisen.

## Claims

1. Lead for writing and/or malting purposes, having 15% b.w. to 30% b.w. of lead base mass of fat and wax base, and with 40% b.w. to 80% b.w. of at least one filler material and 0.1% b.w. to 30% b.w. of organic and/or inorganic colouring pigments, wherein the lead base mass contains - relative to the total mass of the lead - 0.5% to 10% of aluminium distearate, 5% to 20% of oxidised polyethylene wax and 5% to 20% of at least one fatty acid and/or at least one fatty acid derivative with a melting point from 50°C to 110°C.

2. Lead according to claim 1,
**characterised in that**,
a triglyceride with a melting point from 55°C to 65°C is contained.

3. Lead according to claim 1,
**characterised in that**,
a mixture of soya bean acid containing stearic acid, CAS number 57114, and hydrogenated soya bean oil, CAS number 8016-70-4, with a melting point of 95°C to 105°C, is contained.

4. Lead according to one of the preceding claims,
**characterised in that**,
the proportion of lead base mass is 26% b.w. maximum.

5. Lead according to one of the preceding claims,
**characterised in that**,
the oxidised polyethylene wax has a melting point of 115°C to 125°C.

6. Lead according to claim 5,
**characterised in that**,
the oxidised polyethylene wax has a melting point of 118°C to 122°C.

7. Lead according to one of claims 2 to 6,
**characterised in that**,
the triglyceride has a melting point of 58°C to 62°C.

8. Lead according to one of the preceding claims,
**characterised by**
a proportion of aluminium distearate that ranges from 1 to 6% b.w.

9. Lead according to claim 8,
**characterised by**
a proportion of aluminium distearate that ranges from 1 to 3.5% b.w.

10. Lead according to one of the preceding claims,
**characterised by**
a proportion of oxidised polyethylene wax that ranges from 7 to 15% b.w.

11. Lead according to one of the preceding claims,
**characterised by**
a proportion of fatty acid and/or fatty acid derivative that ranges from 5 to 15% b.w.

12. Lead according to one of the preceding claims,
**characterised by**
at least one filler material from the group of china clay, mica, pumice powder and talc.

13. Lead according to one of the preceding claims,
**characterised in that**,
filler materials and colouring pigments have an average particle size of D90 < 20µm.

## Revendications

1. Mine à des fins d'écriture et/ou de peinture, comprenant de 15 % en poids à 30 % en poids d'une composition de base pour une mine à base de graisse et de cire et de 40 % en poids à 80 % d'au moins d'une charge et de 0,1 % en poids à 30 % de pigments colorés organiques et/ou minéraux, la composition de base pour une mine contenant - rapportée à la masse totale de la mine - de 0,5 % à 10 % de distéarate d'aluminium, de 5 % à 20 % de cire de polyéthylène oxydée et de 5 % à 20 % d'au moins un acide gras et/ou d'au moins un dérivé d'acide gras ayant un point de fusion de 50°C à 110°C.

2. Mine suivant la revendication 1,
**caractérisée**
**en ce qu'**elle contient un triglycéride ayant un point de fusion de 55°C à 65°C.

3. Mine suivant la revendication 1,
**caractérisée**
**en ce qu'**elle contient un mélange d'acide de graine de soja contenant de l'acide stéarique N°-CAS. 57113 et de l'huile de graine de soja hydrogénée N°-CAS. 8016-70-4 ayant un point de fusion de 95°C à 105°C.

4. Mine suivant l'une des revendications précédentes,
**caractérisée en ce que** la proportion de composition de base pour une mine est au maximum de 26 % en poids.

5. Mine suivant l'une des revendications précédentes,
**caractérisée en ce que** la cire de polyéthylène oxydée a un point de fusion de 115°C à 125°C.

6. Mine suivant la revendication 5,
**caractérisée en ce que** la cire de polyéthylène oxydée a un point de fusion de 118°C à 122°C.

7. Mine suivant l'une des revendications 2 à 6,
**caractérisée en ce que** le triglycéride a un point de fusion de 58°C à 62°C.

8. Mine suivant l'une des revendications précédentes,
**caractérisée par** une proportion de distéarate d'aluminium de 1 à 6 % en poids.

9. Mine suivant la revendication 8,
**caractérisée par** une proportion de distéarate d'aluminium de 1 à 3,5 % en poids.

10. Mine suivant l'une des revendications précédentes,
**caractérisée par** une proportion de cire de polyéthylène oxydée de 7 à 15 % en poids.

11. Mine suivant l'une des revendications précédentes,
**caractérisée par** une proportion d'acide gras et/ou de dérivé d'acide gras de 5 à 15 % en poids.

12. Mine suivant l'une des revendications précédentes,
**caractérisée par** au moins une charge choisie dans le groupe du kaolin, du mica, des fines de pierre ponce et du talc.

13. Mine suivant l'une des revendications précédentes,
**caractérisée en ce que** des charges et des pigments colorés ont une granulométrie moyenne D90 < 20 µm.
